(19) **Europäisches Patentamt**
**European Patent Office**
**Office européen des brevets**

(11) **EP 3 037 852 A1**

(12) **EUROPEAN PATENT APPLICATION**
published in accordance with Art. 153(4) EPC

(43) Date of publication:
**29.06.2016 Bulletin 2016/26**

(21) Application number: **14838668.3**

(22) Date of filing: **19.08.2014**

(51) Int Cl.:
**G02B 3/00** *(2006.01)*        **G02B 5/00** *(2006.01)*
**G02B 7/02** *(2006.01)*

(86) International application number:
**PCT/JP2014/072079**

(87) International publication number:
**WO 2015/025970 (26.02.2015 Gazette 2015/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.08.2013 JP 2013170092**

(71) Applicant: **Daicel Corporation**
**Osaka-shi, Osaka 530-0011 (JP)**

(72) Inventors:
• **WAKI, Toshinori**
**Himeji-shi, Hyogo 671-1283 (JP)**
• **HAMADA, Toyozo**
**Himeji-shi, Hyogo 671-1283 (JP)**
• **TERAUCHI, Toshihiro**
**Himeji-shi, Hyogo 671-1283 (JP)**

(74) Representative: **Grünecker Patent- und Rechtsanwälte**
**PartG mbB**
**Leopoldstraße 4**
**80802 München (DE)**

(54) **WAFER LENS, WAFER LENS ARRAY, WAFER LENS LAMINATE, AND WAFER LENS ARRAY LAMINATE**

(57)    Provided is a wafer lens array having structural properties contributable to such a production process as not to affect optical properties of wafer lenses.

The wafer lens array according to the present invention includes a plurality of lens units 1, a non-lens unit 2, and a light blocking unit 3. The plurality of lens units 1 are one-dimensionally or two-dimensionally arrayed. The non-lens unit 2 is bonded to the periphery of each of the lens units 1 to couple the plurality of lens units 1 to each other. The light blocking unit 3 is disposed at at least one of the lens units 1 and the non-lens unit 2 on the object side. The lens units 1 and the light blocking unit 3 have heights meeting a condition specified by Expression (1) :

```
    Height of lens unit 1 < Height of light blocking unit 3

Expression (1)
```

Fig. 1

a)

b)

HEIGHT
OF UNIT 1

HEIGHT
OF UNIT 3

HEIGHT
OF UNIT 2

c)

**Description**

Technical Field

The present invention relates to wafer lenses each including a light blocking unit (light blocker), wafer lens arrays, lens modules, imaging modules, and imaging devices, and methods for producing these articles. The present application claims priority to Japanese Patent Application No. 2013-170092 filed to Japan on August 20, 2013, the entire contents of which are incorporated herein by reference.

Background Art

Reduction in size, weight, and thickness have been dramatically made in electronic appliances typified by cellular phones, smartphones, tablet terminals, mobile devices, digital cameras, car-mounted cameras, and security cameras. The reduction also requires reduction in size, weight, and thickness of imaging modules to be installed on those electronic appliances.
Such imaging modules generally include a solid-state image sensing device, and a lens module to form an image on the solid-state image sensing device. The solid-state image sensing device is exemplified by charge coupled devices (CCDs) and complementary metal-oxide semiconductor (CMOS) devices. The lens module employs a wafer lens so as to adapt to reduction in size, weight, and thickness.
Curable resin materials, which have excellent properties such as heat resistance and mechanical strengths, have been received attention as materials for wafer lenses. For higher quality and productivity of wafer lenses, there is a need for curable resin materials that have properties such as heat resistance, curability, dimensional stability, and mechanical strengths at excellent levels. A variety of curable resin materials to form lenses has been proposed (see, for example, Patent Literature (PTL) 1 to 4). The patent literature, however, fails to disclose a curable resin material that has properties such as heat resistance, curability, dimensional stability, and mechanical strengths all at satisfactory levels.
Examples of disclosed methods for producing wafer lenses include a method for producing wafer lenses in which a curable resin material is press-formed to a predetermined thickness, the pressed material is photo-cured or thermally cured to give a wafer lens array including arrayed lenses, and the lens array is cut to give wafer lenses (see PTL 5), and a method for producing an electronic device module including a stack of wafer lenses (see PTL 6). To obtain wafer lenses from such a wafer lens array, the wafer lens array has to be cut certainly without affecting optical properties of the resulting wafer lenses. The above-mentioned patent literature, however, fails to disclose a specific method for cutting the wafer lens array in the above manner.
Imaging modules carrying a lens module and a solid-state image sensing device may suffer from image disturbances typically by leakage and/or reflection of light in regions other than the lens unit, where the image is obtained by image pickup (imaging). As a possible solution to prevent such problems, there is disclosed a wafer lens including a light blocking unit that is integrally formed in regions other than the region where the lens unit is formed (see, for example, PTL 7).
The imaging modules are generally equipped with a "diaphragm" at an object side with respect to the lens (an opposite side to the solid-state image sensing device). The diaphragm is disposed so as to control incident light. Such diaphragm is generally disposed in a tubular member (barrel) on the tubular member side, where the lens module is incorporated in the tubular member (see, for example, PTL 5 and PTL 6).

Citation List

Patent Literature

PTL 1: Japanese Unexamined Patent Application Publication (JP-A) No. 2008-133439
PTL 2: JP-A No. 2011-1401
PTL 3: JP-A No. 2011-132416
PTL 4: JP-A No. 2012-116989
PTL 5: JP-A No. 2010-102312
PTL 6: JP-A No. 2010-173196
PTL 7: JP-A No. 2011-62373

Summary of Invention

Technical Problem

Assume that the diaphragm is disposed in the tubular member (barrel) on the tubular member side. Disadvantageously in this case, there is a need for production of two or more barrels when conditions such as thickness and shape of the diaphragm are to be examined by trial and error or to be examined by providing variations. This is disadvantageous in trial-and-error efficiency, production efficiency, cost, and any other factors.

In contrast, another possible technique is a technique of providing the diaphragm on the lens side. With the technique described in PTL 7, a light blocking unit can be molded integrally in regions other than a region where the lens unit is formed, where the light blocking unit is disposed on the object side with respect to the lens. The technique, however, is a technique of integrally molding (forming) the light blocking unit and requires repetition of steps from the step of curing a curable resin material to the step of cutting the wafer lens array again and again so as to produce a plurality of wafer lenses particularly using the curable resin material. This configuration is disadvantageous in trial and error efficiency, production efficiency, cost, and any other factors, as with the technique mentioned above.

Assume that the diaphragm is to be formed so as to be disposed on or over a limited part of the lens unit or to be formed into a special shape. Unfortunately in this case, the technique described in PTL 7 causes the designing and production of molds for the production of the wafer lens array to be complicated. The technique is thus disadvantageous typically in development efficiency and cost.

Accordingly, the present invention has an object to provide a wafer lens including a light blocking unit and having structural properties that contribute to such a production process as not to affect optical properties of the wafer lens, an array of such wafer lenses, as well as a lens module, an imaging module, and an imaging device each of which includes the wafer lens and/or a stack of the wafer lenses.

The present invention has another object to provide a wafer lens that has high-level properties relating to the wafer lens structure, such as development efficiency, production efficiency, and cost/performance ratio, an array of such wafer lenses, as well as a lens module, an imaging module, and an imaging device each of which includes the wafer lens and/or a stack of the wafer lenses. Solution to Problem

After intensive investigations to achieve the objects, the inventors of the present invention have found a wafer lens array (or wafer-level lens) that includes a lens unit, a non-lens unit, and a light blocking unit, in which the lens unit and the light blocking unit have heights in a specific relationship. The inventors have found that the wafer lens array (or wafer-level lens) can contribute to such a production process as not to affect optical properties of the wafer lens. The present invention has been made based on these findings. In addition, the inventors have found a wafer lens or wafer lens stack, and a method for producing the wafer lens or wafer lens stack, where the wafer lens or wafer lens stack has high-level properties relating to the wafer lens structure, such as development efficiency, production efficiency, and cost/performance ratio and has structural properties contributable to extremely higher production efficiency. Specifically, the inventors have found that this wafer lens or wafer lens stack can be obtained by mounting a light blocking unit having a predetermined shape onto a surface of a wafer lens or wafer lens stack and using the light blocking unit as a spacer in a cutting step to protect the lens surface; and by using the spacer as intact as a light blocking unit without removing the spacer from the wafer lens or wafer lens stack even after the completion of the cutting step.

Specifically, the present invention provides, in an embodiment, a wafer lens array including a plurality of lens units 1, a non-lens unit 2, and a light blocking unit 3. The plurality of lens units 1 are one-dimensionally or two-dimensionally arrayed. The non-lens unit 2 is bonded to the periphery of each of the lens units 1 to couple the lens units 1 to each other. The light blocking unit 3 is disposed at at least one of the lens units 1 and/or the non-lens unit 2 on the object side. The lens units 1 and the light blocking unit 3 have heights meeting a condition specified by Expression (1):

$$\text{Height of lens units 1} < \text{Height of light blocking unit 3} \qquad \text{Expression (1)}$$

in which the "height" in Expression (1) refers to a vertical dimension from a horizontal plane to an object-side surface of each unit, assuming that the wafer lens array is placed on the horizontal plane so as to allow the object side of the wafer lens array to face upward. When at least one of the lens units 1 and the light blocking unit 3 includes portions having different heights, the "height" refers to the height of a highest portion among the portions.

In the wafer lens array, the lens units 1, the non-lens unit 2, and the light blocking unit 3 may have heights meeting a condition specified by Expression (2):

$$\text{Height of non-lens unit 2} \leq \text{Height of lens units 1} <$$

$$\text{Height of light blocking unit 3} \quad \text{Expression (2)}$$

in which the "height" in Expression (2) is defined as with the height in Expression (1). When at least one of the lens units 1, the non-lens unit 2, and the light blocking unit 3 includes portions having different heights, the "height" refers to the height of a highest portion among the portions.

In the wafer lens array, the lens units 1, the non-lens unit 2, and the light blocking unit 3 may have heights meeting a condition specified by Expression (3):

$$\text{Height of lens units 1} < \text{Height of non-lens unit 2} <$$

$$\text{Height of light blocking unit 3} \quad \text{Expression (3)}$$

in which the "height" in Expression (3) is defined as with the height in Expression (1). When at least one of the lens units 1, the non-lens unit 2, and the light blocking unit 3 includes portions having different heights, the "height" refers to the height of a highest portion among the portions.

In the wafer lens array, the light blocking unit 3 may be disposed on or over part of the lens units 1.

The present invention provides, in another embodiment, a wafer lens array stack including a plurality of wafer lens arrays. The wafer lens arrays include at least one wafer lens array mentioned above.

Of the plurality of wafer lens arrays in the wafer lens array stack, a wafer lens array disposed nearest to an object side may be the above-mentioned wafer lens array.

The present invention also provides, in yet another embodiment, a wafer lens including a lens unit 1, a non-lens unit 2, and a light blocking unit 3. The non-lens unit 2 is bonded to the periphery of the lens unit 1. The light blocking unit 3 is disposed at at least one of the lens unit 1 and the non-lens unit 2 on the object side. The lens unit 1 and the light blocking unit 3 have heights meeting a condition specified by Expression (1):

$$\text{Height of lens unit 1} < \text{Height of light blocking unit 3}$$

$$\text{Expression (1)}$$

in which the "height" in Expression (1) refers to a vertical dimension from a horizontal plane to an object-side surface of each unit, assuming that the wafer lens is placed on the horizontal plane so as to allow the object side of the wafer lens to face upward. When at least one of the lens unit 1 and the light blocking unit 3 includes portions having different heights, the term "height" refers to the height of a highest portion among the portions.

In the wafer lens, the lens unit 1, the non-lens unit 2, and the light blocking unit 3 may have heights meeting a condition specified by Expression (2):

$$\text{Height of non-lens unit 2} \leq \text{Height of lens unit 1} <$$

$$\text{Height of light blocking unit 3} \quad \text{Expression (2)}$$

in which the "height" in Expression (2) is defined as with the height in Expression (1). When at least one of the lens unit 1, the non-lens unit 2, and the light blocking unit 3 includes portions having different heights, the "height" refers to the height of a highest portion among the plurality of portions.

In the wafer lens, the lens unit 1, the non-lens unit 2, and the light blocking unit 3 may have heights meeting a condition specified by Expression (3):

$$\text{Height of lens unit 1} < \text{Height of non-lens unit 2} <$$

$$\text{Height of light blocking unit 3} \quad \text{Expression (3)}$$

in which the "height" in Expression (3) is defined as with the height in Expression (1). When at least one of the lens unit 1, the non-lens unit 2, and the light blocking unit 3 includes portions having different heights, the "height" refers to the height of a highest portion among the plurality of portions.]

In the wafer lens, the light blocking unit 3 may be disposed on or over part of the lens unit 1.

The present invention provides, in still another embodiment, a wafer lens obtained by cutting the wafer lens array.

The present invention provides, in another embodiment, a wafer lens stack including a plurality of wafer lenses being stacked, where the wafer lenses include at least one above-mentioned wafer lens.

In the wafer lens stack, of the wafer lenses, a wafer lens disposed nearest to an object side may be the above-mentioned wafer lens.

The present invention provides, in another embodiment, a wafer lens stack obtained by cutting the wafer lens array stack.

The present invention provides, in another embodiment, a lens module including at least one of the wafer lens and the wafer lens stack.

The present invention provides, in another embodiment, an optical device including the lens module.

The present invention provides, in another embodiment, an imaging module including the lens module.

In addition, the present invention provides an imaging device including the imaging module.

Advantageous Effects of Invention

The wafer lens and the wafer lens stack according to the present invention has the configuration in which the lens unit(s) and the light blocking unit have heights controlled within a specific relationship. This configuration allows the wafer lens and the wafer lens stack to contribute to such a production process as not to affect optical properties. The wafer lens and the wafer lens stack according to the present invention achieve excellent properties such as development efficiency, production efficiency, and cost/performance ratio because of their structural properties. Specifically, particularly when the wafer lens and the wafer lens stack are obtained respectively by cutting a wafer lens array and a wafer lens array stack, the wafer lens and the wafer lens stack have a configuration as follows. The light blocking unit is used as a spacer to protect the lens unit surface in the cutting step of these arrays; and the spacer is used as intact as the light blocking unit without removal from the wafer lens or wafer lens stack even after the completion of the cutting step. This configuration provides the excellent properties. In addition, the wafer lens and the wafer lens stack according to the present invention are each produced by a distinctive production process. This process provides excellent optical properties and extremely high production efficiency. Accordingly, the present invention can provides a wafer lens including a light blocking unit, a wafer lens array, a lens module, an imaging module, and an imaging device, each of which can achieve reduction in size, weight, and thickness and still has quality and performance at excellent levels. In addition, the present invention can provide methods for producing these articles.

Brief Description of Drawings

Fig. 1 depicts schematic views (cross-sectional views) of wafer lens arrays in exemplary configurations;
Fig. 2 depicts schematic views (cross-sectional view) of wafer lenses in exemplary configurations;
Fig. 3 depicts schematic views (cross-sectional views) of wafer lens array stacks in exemplary configurations;
Fig. 4 depicts schematic views (cross-sectional views) of wafer lens stacks in exemplary configurations;
Fig. 5 depicts schematic views (plan views) of light blocking units in exemplary configurations;
Fig. 6 depicts schematic views (cross-sectional views) of wafer lens stacks in exemplary configurations, where the wafer lens stacks are each placed on a dicing tape;
Fig. 7 is photomicrographs (at 100-fold magnification) illustrating how the surfaces of lens units 1 of wafer lenses are, where the wafer lenses are obtained by cutting wafer lens arrays; and
Fig. 8 is schematic views (cross-sectional views) of lens modules in exemplary configurations.

Description of Embodiments

Wafer Lens Array (A) Configuration

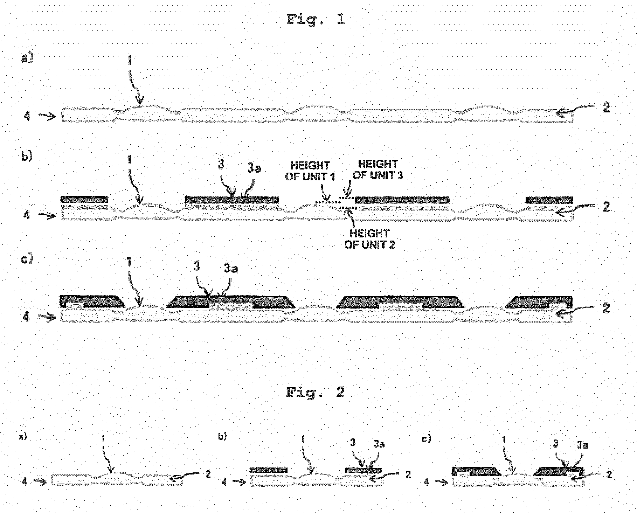

Figs. 1b) and 1c) illustrate configurations of a wafer lens array according to an embodiment of the present invention. The wafer lens array according to the embodiment of the present invention is also referred to as a "wafer lens array (A)". It should be noted, however, that the present invention is not limited to this. Fig. 1a) illustrates an exemplary configuration of a wafer lens array devoid of light blocking units.

The wafer lens array (A) includes a plurality of lens units 1, a non-lens unit 2, and a light blocking unit 3. More specifically, the wafer lens array (A) is a wafer lens array that includes lens units 1, a non-lens unit 2, and a light blocking unit 3. The lens units 1 are arrayed one-dimensionally or two-dimensionally. The non-lens unit 2 is bonded to the periphery of each of the lens units 1 to couple the lens units 1 to each other. The light blocking unit 3 is disposed at at least one of the lens units 1 and the non-lens unit 2 (at the lens units 1 and/or the non-lens unit 2) on the object side (opposite side to the image-forming side). The wafer lens array (A) may have any of plate, sheet, and film forms. The lens units 1 are one-dimensionally or two-dimensionally arrayed either regularly or irregularly. The lens units 1 and the non-lens unit 2 may be made from an identical material or different materials. The light blocking unit 3 may be made from materials including a material identical to the material of at least one of the lens units 1 and the non-lens unit 2 (either one or both of the lens units 1 and the non-lends unit 2), or may be made from a material(s) different from the material(s) of the lens units 1 and the non-lens unit 2.

The light blocking unit 3 may be disposed on one side or both sides of the wafer lens array (A). The light blocking unit 3 may be disposed at the lens units 1 alone, or at the non-lens unit 2 alone, or at both the lens units 1 and the non-lens unit 2. Fig. 1b) illustrates an embodiment in which the light blocking unit 3 is disposed at the non-lens unit 2 alone; and Fig. 1c) is an embodiment in which the light blocking unit 3 is disposed at both the lens units 1 and the non-lens unit 2. Assume that the light blocking unit 3 is disposed at the lens units 1. In this case, the light blocking unit 3 is disposed on or over part of the lens units 1. Assume that the light blocking unit 3 is disposed on or over part of the lens units 1. In this case, the light blocking unit 3 may be in contact with, or not in contact with, the lens units 1. Fig. 1c) illustrates an embodiment in which the light blocking unit 3 is disposed so as to be not in contact with, but over (above) part of the lens units 1. Assume that the light blocking unit 3 is disposed at the non-lens unit 2. In this case, the light blocking unit 3 may be disposed on or over only part of the non-lens unit 2, or on or over the entire non-lens unit 2. The light blocking unit 3 may be formed (molded) integrally with, or independently from, at least one of the lens units 1 and the non-lens unit 2 (the lens units 1 and/or the non-lens unit 2).

The light blocking unit 3 has the function of light shielding, i.e., the function of preventing, for example, leakage and reflection of unnecessary light with respect to the imager (imaging device). The light blocking unit 3, when disposed at the lens units 1, also has the function as a "diaphragm" to adjust light incoming from the object side. Assume that another member is disposed on or over one or both sides of the wafer lens array (A). In this case, the light blocking unit 3 can also function as a spacer so as to provide spacing between the wafer lens array (A) and the other member.

In the wafer lens array (A), the lens units 1 and the light blocking unit 3 have heights meeting a condition specified by Expression (1):

$$\text{Height of the lens unit 1} < \text{Height of the light blocking unit 3} \qquad \text{Expression (1)}$$

The "height" in Expression (1) refers to a vertical dimension from a horizontal plane to the object-side surface of each unit, assuming that the wafer lens array is placed on the horizontal plane so as to allow the object side of the wafer lens array to face upward. When the lens units 1 or the light blocking unit 3 (the lens units 1 and/or the light blocking unit 3) includes portions having different heights, the "height" refers to the height of a highest portion among the portions. The configuration meeting the condition specified by Expression (1) prevents or minimizes the contamination of the lens unit 1 in the after-mentioned wafer lens array or wafer lens array stack cutting step. This is contributable to such a production process as not to affect optical properties of the wafer lenses.

The wafer lens array (A) includes the plurality of lens units 1. It is enough that at least each lens unit 1 and a light blocking unit 3 most adjacent to the each lens unit 1 have heights meeting the condition specified by Expression (1). This effectively eliminates or minimizes the contamination of the lens units 1. After-mentioned conditions specified by Expression (2) and Expression (3), when met, give similar effects to this.

The lens units 1, the non-lens unit 2, and the light blocking unit 3 in the wafer lens array (A) may have heights meeting a condition specified by Expression (2):

$$\text{Height of the non-lens unit 2} \leq \text{Height of the lens units 1} < \text{Height of the light blocking unit 3} \qquad \text{Expression (2)}$$

The "height" in Expression (2) is as defined in Expression (1). Assume that the light blocking unit 3 is disposed on or over the entire surface of the non-lens unit 2. In this case, the "height of the non-lens unit 2" refers to a vertical dimension from the horizontal plane to the surface (object-side surface) of the non-lens unit 2 underlying the light blocking unit 3. When the lens units 1, the non-lens unit 2, and/or the light blocking unit 3 (namely, at least one of the lens units 1, the non-lens unit 2, and the light blocking unit 3) includes portions having different heights, the "height" is defined as the height of a highest portion among the portions. Particularly when the light blocking unit 3 is formed independently from at least one of the lens units 1 and the non-lens unit 2, meeting the condition specified by Expression (2) can increase the degree of design freedom of the light blocking unit 3 in the thickness direction. This contributes to reduction in size, weight, and thickness of the lens module.

Alternatively in the wafer lens array (A), the lens units 1, the non-lens unit 2, and the light blocking unit 3 may have heights meeting a condition specified by Expression (3) :

$$\text{Height of the lens units 1} < \text{Height of the non-lens}$$
$$\text{unit 2} < \text{Height of the light blocking unit 3} \qquad \text{Expression}$$
$$(3)$$

The "height" in Expression (3) is defined as in Expressions (1) and (2). Meeting the condition specified by Expression (3) allows the wafer lens array (A) and a wafer lens array stack (C) to be placed and more readily stably secured onto a dicing tape in the wafer lens array or wafer lens array stack cutting step. This tends to readily eliminate or minimize cutting defects of the wafer lens array (A) and the wafer lens array stack (C).

Assume that one or more configurations (structures) of the lens units 1, the non-lens unit 2, and the light blocking unit 3 deform to cause the dimensions such as thickness to vary. Even in this case, the condition(s) specified by Expression (1) and/or Expression (2) and/or Expression (3) is preferably met in the present invention. The deformation may occur in various instances and often occurs particularly upon placing and securing of the wafer lens array (A) or the wafer lens array stack (C) on the dicing tape in the wafer lens array or wafer lens array stack cutting step. Even in this case, however, the condition(s) specified by Expression (1) and/or Expression (2) and/or Expression (3) is preferably met.

Wafer Lens (B) Configuration

Figs. 2b) and 2c) illustrate exemplary configurations of a wafer lens according to an embodiment of the present invention. The wafer lens according to the embodiment of the present invention is also referred to as a "wafer lens (B)". The present invention, however, is not limited to this. Fig. 2a) illustrates an exemplary configuration of a wafer lens devoid of light blocking units.

The wafer lens (B) includes one lens unit 1, a non-lens unit 2, and a light blocking unit 3. More specifically, the wafer lens (B) is a wafer lens that includes a single lens unit 1; a non-lens unit 2; and a light blocking unit 3. The non-lens unit 2 is bonded to the periphery of the lens unit 1. The light blocking unit 3 is disposed at at least one of the lens unit 1 and the non-lens unit 2 on the object side (opposite side to the image-forming side). The wafer lens (B) may be obtained by cutting the wafer lens array (A) so as to separate the lens units 1 in the wafer lens array (A) into individual (separated) lens units 1. Alternatively, the wafer lens (B) may be one produced as a single wafer lens including a lens unit 1, a non-lens unit 2, and a light blocking unit 3.

Materials for the lens unit 1, the non lens unit 2, and the light blocking unit 3 are as with the materials in the wafer lens array (A). The position at which the light blocking unit 3 is disposed, the forming (molding) process, and functions are also as in the wafer lens array (A). The lens unit 1, the non-lens unit 2, and the light blocking unit 3 have heights that meet the condition specified by Expression (1) and may meet one of the conditions specified by Expression (2) and Expression (3), as in the wafer lens array (A). In the wafer lens (B), the light blocking unit 3 is preferably disposed on or over part of the lens unit 1, as in the wafer lens array (A).

Wafer Lens Array Stack (C) Configuration

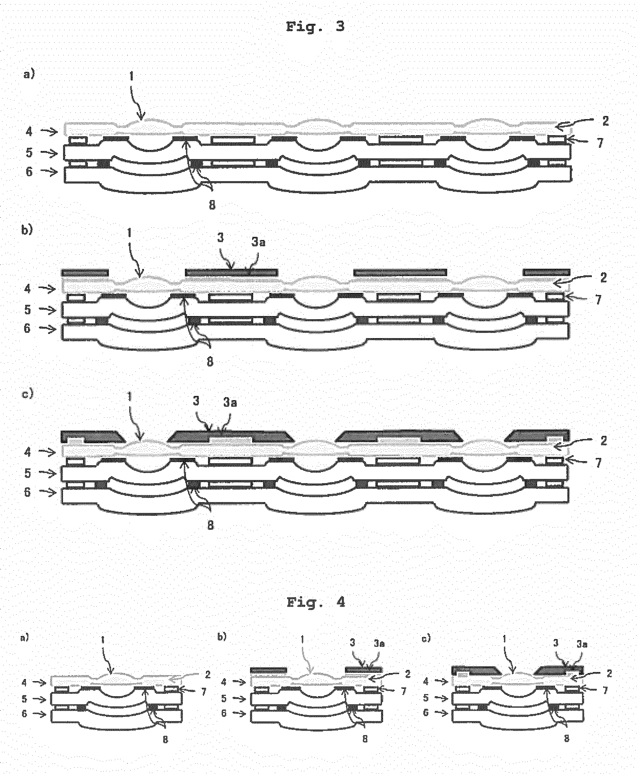

Figs. 3b) and 3c) illustrate exemplary configurations of a wafer lens array stack according to an embodiment of the present invention. The wafer lens array stack according to the embodiment of the present invention is also referred to as a "wafer lens array stack (C)". However, the present invention is not limited to this. Fig. 3a) illustrates an exemplary configuration of a wafer lens array stack devoid of the wafer lens arrays (A).

Of wafer lens arrays or wafer lenses respectively constituting the wafer lens array stack (C) or an after-mentioned wafer lens stack (D), a wafer lens array or wafer lens disposed nearest to the object side is also referred to as a "first lens", and other wafer lens arrays or wafer lenses are also referred to as a "second lens", a "third lens" ... in the order toward the image-forming side.

The wafer lens array stack (C) includes a stack of wafer lens arrays including at least one wafer lens array (A).

Of the wafer lens arrays (plurality of wafer lens arrays) constituting the wafer lens array stack (C), a wafer lens array positioned nearest to the object side is preferably a wafer lens array (A). Figs. 3b) and 3c) illustrate examples of the wafer lens array stack (C) including a wafer lens array (A) as a wafer lens array positioned nearest to the object side.

Of the wafer lens arrays constituting the wafer lens array stack (C), other wafer lens array(s) than the wafer lens array (A) may be a wafer lens array having a configuration identical to or different from the wafer lens array (A).

The adjacent pair(s) of individual wafer lens arrays in the wafer lens array stack (C) may be joined to each other via a known or common bonding means, or not. The joining may be performed via a know or common securing means (e.g., the use of an adhesive).

Wafer Lens Stack (D) Configuration

Figs. 4b) and 4c) illustrate exemplary configurations of a wafer lens stack according to an embodiment of the present invention. The wafer lens stack according to the embodiment of the present invention is also referred to as a "wafer lens stack (D)". However, the present invention is not limited to this. Fig. 4a) illustrates an exemplary configuration of a wafer lens stack devoid of the wafer lenses (B).

The wafer lens stack (D) includes a stack of wafer lenses including at least one wafer lens (B). Of the wafer lenses (plurality of wafer lenses) constituting the wafer lens stack (D), a wafer lens positioned nearest to the object side is preferably the wafer lens (B). Figs. 4b) and 4c) illustrate exemplary wafer lens stacks (D) including a wafer lens (B) as a wafer lens positioned nearest to the object side.

Of the wafer lens arrays constituting the wafer lens stack (D), wafer lens(es) other than the wafer lens (B) may be a wafer lens having a configuration identical to, or different from, the wafer lens (B).

The wafer lens stack (D) may be obtained by cutting the wafer lens array stack (C) so as to separate the lens units 1 in the wafer lens array stack (C) into individual (separated) lens units 1. Alternatively, the wafer lens stack (D) may also be produced by stacking the wafer lens (B) and one or more other wafer lenses than the wafer lens (B) on each other.

The wafer lenses in the wafer lens stack (D) may be joined to each other by a known or common bonding means, or not. The joining may be performed by a known or common securing means (e.g., the use of an adhesive).

Curable Resin Material

An exemplary curable resin material for use in the present invention will be illustrated below. However, the present invention is not limited to these. Such curable resin material is used in particular as a material to form the lens unit(s) 1 and the non-lens unit 2 (in particular, to form the lens unit(s) 1) in the wafer lens array (A) and in the wafer lens (B).

The curable resin material for use in the wafer lens array (A) and/or the wafer lens (B) according to the present invention is a material (curable composition) that is cured via application of heat and/or light. The light application may refer to the application of active energy rays such as ultraviolet rays and electron beams. Examples of the curable resin material include, but are not limited to, epoxy resin materials and silicone resin materials. Hereinafter components to constitute a curable resin material that is particularly suitable as a material for the wafer lens array (A) and the wafer lens (B) according to the present invention, and a cured product of the curable resin material will be illustrated. The curable resin material just mentioned above is also referred to as a "curable resin material for use in the present invention".

Cycloaliphatic Epoxide (a)

The curable resin material for use in the present invention preferably includes a cycloaliphatic epoxide (a). The cycloaliphatic epoxide (a) is a compound containing an alicycle substituted with at least one epoxy group. This substituted alicycle is also referred to as a "cycloaliphatic epoxy group". The cycloaliphatic epoxy group is preferably an epoxidized cycloolefin group. The cycloolefin is a cyclic aliphatic hydrocarbon that includes a ring and at least one carbon-carbon unsaturated bond among carbon-carbon bonds constituting the ring. The epoxidized cycloolefin group is a group (monovalent group) of a structure with at least one of the carbon-carbon unsaturated bonds of the cycloolefin being epoxidized, except for removing one hydrogen atom from the structure. Specifically, the epoxidized cycloolefin group is a group containing an aliphatic hydrocarbon ring structure and an epoxy group, in which the epoxy group is an epoxy group including an oxygen atom in combination with adjacent two carbon atoms constituting the aliphatic hydrocarbon ring. The cycloaliphatic epoxides (a) exclude after-mentioned siloxane compounds (b1) and cationically polymerizable compounds (b2).

Examples of the cycloolefin group (before epoxidation) in the epoxidized cycloolefin group include, but are not limited to, cycloalkenyl groups such as cyclopropenyl groups (e.g., 2-cyclopropen-1-yl group), cyclobutenyl groups (e.g., 2-cyclobuten-1-yl group), cyclopentenyl groups (e.g., 2-cyclopenten-1-yl and 3-cyclopenten-1-yl groups), and cyclohexenyl groups (e.g., 2-cyclohexen-1-yl and 3-cyclohexen-1-yl groups); cycloalkadienyl groups such as 2,4-cyclopentadien-1-yl, 2,4-cyclohexadien-1-yl, and 2,5-cyclohexadien-1-yl groups; and polycyclic groups such as dicyclopentenyl, dicyclohexenyl, and norbornenyl groups. One or more substituents may be bonded to the aliphatic hydrocarbon ring constituting the cycloolefin group in the epoxidized cycloolefin group.

Among them, the cycloolefin group is preferably a $C_5$-$C_{12}$ cycloolefin group, more preferably a $C_5$-$C_{12}$ cycloalkenyl group, and furthermore preferably a cyclohexenyl group. Specifically, the epoxidized cycloolefin group is preferably an epoxidized $C_5$-$C_{12}$ cycloolefin group, more preferably an epoxidized $C_5$-$C_{12}$ cycloalkenyl group, and furthermore preferably an epoxidized cyclohexenyl group (cyclohexene oxide group). The cycloaliphatic epoxide (a) may include each of different epoxidized cycloolefin groups alone or in combination.

The cycloaliphatic epoxide (a) may contain cycloaliphatic epoxy group(s) in a number not limited, as long as being 2 or more, but preferably 2 to 4, and more preferably 2.

In the cycloaliphatic epoxide (a), at least two of the cycloaliphatic epoxy groups are preferably bonded via a single bond or a linkage group. The linkage group refers to a divalent group containing one or more atoms. Examples of the linkage group include, but are not limited to, divalent hydrocarbon groups, carbonyl group, ether bond, ester bond, carbonate, amido, and groups each including two or more of them linked to each other.

Non-limiting examples of the divalent hydrocarbon groups include divalent aliphatic hydrocarbon groups, divalent alicyclic hydrocarbon groups, and groups each including two or more of them bonded to each other. Examples of the divalent aliphatic hydrocarbon groups include, but are not limited to, straight- or branched-chain alkylene groups such as methylene, methylmethylene, dimethylmethylene, ethylene, propylene, trimethylene, and tetramethylene groups, of which $C_1$-$C_6$ alkylene groups are typified. Examples of the divalent alicyclic hydrocarbon groups include, but are not limited to, divalent cycloalkylene groups such as 1,2-cyclopentylene, 1,3-cyclopentylene, 1,2-cyclohexylene, 1,3-cyclohexylene, and 1,4-cyclohexylene groups.

Of the linkage groups, preferred are oxygen-containing linkage groups such as -CO-, -O-CO-O-, -COO-, -O-, -CONCH-; groups each including two or more of these groups linked to each other; and groups each including one or more of these groups linked to one or more divalent hydrocarbon groups. The divalent hydrocarbon groups are as exemplified above.

The cycloaliphatic epoxide (a) is preferably devoid of ester groups (ester bonds). This is preferred from the viewpoints typically of curable resin material curability; and, of the wafer lens (cured product), moisture resistance, heat resistance (in particular glass transition temperature), low shrinkage, and low linear expansion.

The curable resin material for use in the present invention may include each of different cycloaliphatic epoxides (a) alone or in combination. The cycloaliphatic epoxides (a) may be produced by a known or common method. The cycloaliphatic epoxides (a) may also be available as commercial products. Preferred examples of the cycloaliphatic epoxide (a) include, but are not limited to, 3,4-epoxycyclohexylmethyl 3,4-epoxycyclohexanecarboxylate (trade name CELLOXIDE 2021P, supplied by Daicel Corporation) and 3,4,3',4'-diepoxybicyclohexyl, of which 3,9,3',4'-diepoxybicyclohexyl is particularly preferred. This is preferred from the viewpoints of curable resin material curability; and, of the wafer lens (cured product), moisture resistance, heat resistance (in particular, glass transition temperature), low shrinkage, and low linear expansion.

The curable resin material for use in the present invention may contain the cycloaliphatic epoxide(s) (a) in a content not limited, but preferably 5 to 60 percent by weight, more preferably 10 to 55 percent by weight, and furthermore preferably 15 to 50 percent by weight, based on the total weight (100 percent by weight) of the curable resin material. The curable resin material, when containing the cycloaliphatic epoxide(s) (a) in a content within the range, allows the wafer lens (cured product) to have heat resistance and mechanical strengths in balance at a high level.

Siloxane Compound (b1)

The curable resin material for use in the present invention preferably includes a siloxane compound (b1). The siloxane compound (b1) refers to a compound that contains two or more epoxy groups per molecule and contains a siloxane skeleton including siloxane bond(s) (Si-O-Si). Examples of the siloxane skeleton in the siloxane compound (b1) include, but are not limited to, cyclic siloxane skeletons; and polysiloxane skeletons such as straight- or branched-chain silicones (straight- or branched-chain polysiloxanes), as well as cage-like or ladder-like polysilsesquioxanes. Among them, the siloxane skeleton is preferably selected from cyclic siloxane skeletons. This is preferred from the viewpoints of curable resin material curability; and wafer lens heat resistance and mechanical strengths. Specifically, the siloxane compound (b1) is preferably selected from cyclic siloxanes containing two or more epoxy groups per molecule.

Assume that the siloxane compound (b1) is a cyclic siloxane containing two or more epoxy groups. In this case, the number of Si-O units to constitute the siloxane ring is not limited, but is preferably 2 to 12, and more preferably 4 to 8. This is preferred from the viewpoints of curable resin material curability; and wafer lens heat resistance and mechanical strengths. The number of Si-O units is equal to the number of silicon atoms constituting the siloxane ring.

The number per molecule of epoxy groups in the siloxane compound (b1) is not limited, as long as being 2 or more, but preferably 2 to 4, and more preferably 3 or 4. This is preferred from the viewpoints typically of curable resin material curability; and wafer lens heat resistance and mechanical strengths.

The siloxane compound (b1) may have an epoxy equivalent (as measured in conformity with JIS K7236) not limited, but preferably 180 to 400, more preferably 240 to 400, and furthermore preferably 240 to 350. This is preferred from the viewpoints of curable resin material curability; and wafer lens heat resistance and mechanical strengths.

The epoxy groups in the siloxane compound (b1) are preferably, but not limitatively, cycloaliphatic epoxy groups, and particularly preferably include at least one cyclohexene oxide group. This is preferred from the viewpoints of curable resin material curability; and wafer lens heat resistance and mechanical strengths. The cyclohexene oxide group is an epoxy group that includes an oxygen atom in combination with adjacent two carbon atoms constituting a cyclohexene ring.

More specifically, non-limiting examples of the siloxane compound (b1) include 2,4-di[2-(3-{oxabicyclo[4.1.0]heptyl})ethyl]-2,4,6,6,8,8-hexamethyl-cyclotetrasiloxane, 4,8-di[2-(3-{oxabicyclo[4.1.0]heptyl})ethyl]-2,2,4,6,6,8-hexamethyl-cyclotetrasiloxane, 2,4-di[2-(3-{oxabicyclo[4.1.0]heptyl})ethyl]-6,8-dipropyl-2,4,6,8-tetramethyl-cyclotetrasiloxane, 4,8-di[2-(3-{oxabicyclo[4.1.0]heptyl})ethyl]-2,6-dipropyl-2,4,6,8-tetramethyl-cyclotetrasiloxane, 2,4,8-tri[2-(3-{oxabicyclo[4.1.0]heptyl})ethyl]-2,4,6,6,8-pentamethylcyclotetrasiloxane, 2,4,8-tri[2-(3-{oxabicyclo[4.1.0]heptyl})ethyl]-6-propyl-2,4,6,8-tetramethyl-cyclotetrasiloxane, 2,4,6,8-tetra[2-(3-(oxabicycio[4.1.0]heptyl))ethyl]-2,4,6,8-tetramethyl-cyclotetrasiloxane, and epoxy-containing silsesquioxanes.

Non-limiting examples of the siloxane compound (b1) also include silicone resins containing cycloaliphatic epoxy groups, described in JP-A No. 2008-248169; and organopolysilsesquioxane resins containing at least two epoxy functional groups per molecule, described in JP-A No. 2008-19422.

The curable resin material for use in the present invention may include each of different siloxane compounds (b1) alone or in combination. The siloxane compound(s) (b1) may also be selected from, but not limited to, commercial products available typically under the trade names X-40-2678, X-40-2670, and X-40-2720 (each from Shin-Etsu Chemical Co., Ltd.).

The curable resin material for use in the present invention may contain the siloxane compound(s) (b1) in a content (blending amount) not limited, but preferably 1 to 50 percent by weight, more preferably 5 to 45 percent by weight, and furthermore preferably 10 to 40 percent by weight, based on the total weight (100 percent by weight) of the curable resin material. The curable resin material, when containing the siloxane compound(s) (b1) in a content within the range, may allow the wafer lens to have heat resistance and mechanical strengths in balance at a high level.

Cationically Polymerizable Compound (b2)

The curable resin material for use in the present invention preferably includes a cationically polymerizable compound (b2). The cationically polymerizable compound (b2) refers to a compound containing at least one cationically curable functional group (cationically polymerizable functional group). The cationically polymerizable compound preferably contains at least one aromatic ring per molecule. The curable resin material, when including the cationically polymerizable compound (b2), may tend to efficiently impart heat resistance and optical properties such as high transparency, a high refractive index, and a low Abbe number to the cured product of the curable resin material for use in the present invention.

Examples of the aromatic ring of the cationically polymerizable compound (b2) include, but are not limited to, aromatic hydrocarbon rings including aromatic monocyclic hydrocarbon rings such as benzene ring; and aromatic fused polycyclic hydrocarbon rings such as naphthalene, anthracene, fluorene, and pyrene rings. Examples of the aromatic ring also include, but are not limited to, aromatic heterocyclic rings such as pyridine, furan, pyrrole, benzofuran, indole, carbazole, quinoline, benzimidazole, and quinoxaline rings. Among them, the aromatic ring is preferably selected from aromatic hydrocarbon rings, is more preferably selected from benzene ring and fluorene ring, and is particularly preferably fluorene ring. The fluorene ring is preferred from the viewpoints of imparting optical properties including a high refractive index and a low Abbe number to the cured product.

One or more substituents may be bonded on the aromatic ring of the cationically polymerizable compound (b2). The cationically polymerizable compound (b2) may contain each of different aromatic rings alone or in combination.

The number per molecule of the aromatic ring in the cationically polymerizable compound (b2) is not limited, as long as being 1 or more, but is preferably 1 to 10, and more preferably 2 to 8.

Non-limiting examples of the cationically curable functional group of the cationically polymerizable compound (b2) include known or common cationically curable (cationically polymerizable) functional groups which are exemplified by cyclic ether groups such as epoxy, oxetanyl, tetrahydrofuranyl, and oxazolinyl groups; vinyl-containing groups such as vinyl ether group and styryl group; and groups including one or more of these groups. Among them, the cationically curable functional group is preferably selected from cycloaliphatic epoxy groups (epoxidized cycloolefin groups), glycidyl group, and oxetanyl group. These are preferred from the viewpoint of reactivity of the cationically polymerizable compound (b2) with the cycloaliphatic epoxide (a). The cationically polymerizable compound (b2) may contain each of different cationically curable functional groups alone or in combination.

The number per molecule of cationically curable functional groups in the cationically polymerizable compound (b2) is not limited, but preferably 2 to 10, and more preferably 2 to 4.

Of cationically polymerizable compounds (b2), examples of aromatic-ring-containing epoxides include, but are not limited to, bisphenol-A epoxides (e.g., diglycidyl ethers of bisphenol-A and of bisphenol-A alkylene oxide adducts), bisphenol-F epoxides (e.g., diglycidyl ethers of bisphenol-F and of bisphenol-F alkylene oxide adducts), biphenol epoxides, phenol novolac epoxides, cresol novolac epoxides, cresol epoxides, bisphenol-A cresol novolac epoxides, polyphenol epoxides, brominated bisphenol-A epoxides, brominated bisphenol-F epoxides, hydroquinone diglycidyl ether, resorcinol diglycidyl ether, terephthalic acid diglycidyl ester, phthalic acid diglycidyl ester, adducts of carboxy-terminated polybutadiene with bisphenol-A epoxy resins, naphthalene epoxides (naphthalene-ring-containing epoxides), and fluorene-ring-containing epoxides. Examples of the aromatic-ring-containing epoxides include, but are not limited to, aromatic-skeleton-containing alicyclic epoxides disclosed in JP-A No. 2009-179568.

Of the cationically polymerizable compounds (b2), examples of aromatic-ring-containing oxetane compounds include, but are not limited to, 1,4-bis{[(3-ethyl-3-oxetanyl)methoxy]methyl}benzene, 3-ethyl-3-[(phenoxy)methyl]oxetane, 4,4'-bis[3-ethyl-(3-oxetanyl)methoxymethyl]biphenyl, and novolac oxetane resins.

The cationically polymerizable compound (b2) may also be selected from commercial products. Of the cationically polymerizable compounds (b2), non-limiting examples of commercial products of bisphenol-A epoxides include products available under the trade names jER827, jER828, jER828EL, jER828XA, and jER834 (each from Mitsubishi Chemical Corporation); and the trade names EPICLON 840, EPICLON 840-S, EPICLON 850, EPICLON 850-S, and EPICLON 850-LC (each from DIC Corporation). Of the cationically polymerizable compounds (b2), non-limiting examples of commercial products of epoxides containing a naphthalene ring in the molecule include products available under the trade names EPICLON HP4032, HP4032D, HP4700, HP4710, HP4770, and HP5000 (each from DIC Corporation). Of the cationically polymerizable compounds (b2), non-limiting examples of commercial products of epoxides containing a fluorene ring in the molecule include products available under the trade names PG-100, EG-200, and EG-250 (each from Osaka Gas Chemicals Co., Ltd.); and trade names ONCOAT EX-1010, ONCOAT EX-1011, ONCOAT EX-1012, ONCOAT EX-1020, ONCOAT EX-1030, ONCOAT EX-1040, ONCOAT EX-1050, and ONCOAT EX-1051 (each from NAGASE & CO., LTD.). Of the cationically polymerizable compounds (b2), examples of commercial products of oxetane compounds containing an aromatic ring in the molecule include, but are not limited to, products available under the trade names OXT-121. and OXT-211 (each from Toagosei Co., Ltd.); and the trade name ETERNACOLL OXBP (from Ube Industries, Ltd.).

The curable resin material for use in the present invention may include each of different cationically polymerizable compounds (b2) alone or in combination.

The curable resin material for use in the present invention may contain the cationically polymerizable compound(s) (b2) in a content (blending amount) not limited, but preferably 40 to 90 percent by weight, more preferably 40 to 80 percent by weight, and furthermore preferably 45 to 75 percent by weight, based on the total weight (100 percent by weight) of the curable resin material. The curable resin material, if containing the cationically polymerizable compound(s) (b2) in a content of less than 40 percent by weight, may hardly impart optical properties including a high refractive index and a low Abbe number to the cured product. In contrast, the curable resin material, if containing the cationically polymerizable compound(s) (b2) in a content of greater than 90 percent by weight, may hardly offer effective rapid curability upon curing and effective shape stability.

Curing Agent (c)

The curable resin material for use in the present invention may include a curing agent (c). The curing agent (c) is a compound that has the function of initiating and/or promoting a curing reaction of a curable compound (in particular, an epoxide) containing a cationically curable functional group (in particular, an epoxy group) or reacting with the curable compound, to cure the curable resin material. The curable compound containing a cationically curable functional group is exemplified by the cycloaliphatic epoxides (a), the siloxane compounds (b1), and the cationically polymerizable compounds (b2). Examples of the curing agent (c) include, but are not limited to, curing catalysts and other known or common curing agents. The curable resin material for use in the present invention may include each of different curing agents (c) alone or in combination.

Examples of the curing catalysts as the curing agent (c) include, but are not limited to, heat-cationic curing agents (c1) and photo-cationic curing agents (c2). The heat-cationic curing agents (c1) refer to compounds that generate a cationic species upon heat treatment to initiate curing. The photo-cationic curing agents (c2) refer to compounds that generate a cationic species upon irradiation with active energy rays such as ultraviolet rays to initiate curing.

Non-limiting examples of the heat-cationic curing agents (c1) include aryldiazonium salts, aryliodonium salts, arylsulfonium salts, and arene-ion complexes. Preferably usable examples of them include commercial products available typically under the trade names PP-33, CP-66, and CP-77 (from ADEKA CORPORATION); the trade name FC-509 (from 3M Company); the trade name UVE1014 (from G.E.); the trade names San-Aid SI-60L, San-Aid SI-80L, San-Aid SI-100L, San-Aid SI-110L, and San-Aid SI-150L (from SANSHIN CHEMICAL INDUSTRY CO., LTD.); and the trade name CG-24-61 (from Ciba Japan K.K.). Non-limiting examples of the heat-cationic curing agents (c1) also include compounds between a silanol and a chelate compound, where the chelate compound is a chelate compound of a metal with acetoacetic acid or a diketone; and compounds between a phenol and a chelate compound, where the chelate compound is a chelate compound of a metal with acetoacetic acid or a diketone. A non-limiting example of the silanol is triphenylsilanol. The metal is exemplified by, but not limited to, aluminum and titanium. A non-limiting example of the phenol is bisphenol-S.

Of the heat-cationic curing agents (c1), preferred are curing agents that can control the curing of the curable resin material for use in the present invention to start at a temperature of 60°C to 150°C (more preferably at a temperature of 80°C to 120°C).

Examples of the photo-cationic curing agents (c2) include, but are not limited to, hexafluoroantimonate salts, pentafluorohydroxyantimonate salts, hexafluorophosphate salts, and hexafluoroarsenate salts. Preferred examples of the cationic catalysts include, but are not limited to, commercial products available typically under the trade name UVACURE 1590 (from DAICEL-CYTEC Company, Ltd.); the trade names CD-1010, CD-1011, and CD-1012 (each from Sartomer USA, LLC); the trade name IRGACURE 264 (from BASF SE); the trade name CIT-1682 (from Nippon Soda Co., Ltd.); and the trade name CPI-101A (from San-Apro Ltd.).

The curable resin material may contain the curing catalyst(s) as the curing agent (c) in a proportion (blending amount) not limited, but preferably 0.001 to 15 parts by weight, more preferably 0.01 to 10 parts by weight, furthermore preferably 0.05 to 10 parts by weight, and particularly preferably 0.1 to 5 parts by weight, per 100 parts by weight of the total weight of curable compounds contained in the curable resin material. The curable resin material, when including the curing catalyst(s) in a proportion within the range, may give a cured product that has heat resistance, light resistance, and transparency at excellent levels.

Other Cationically Curable Compounds

The curable resin material for use in the present invention may further include another cationically curable compound. The "other cationically curable compound" refers to a cationically curable compound other than the cycloaliphatic epoxides (a), the siloxane compounds (b1), and the cationically polymerizable compounds (b2). Examples of the other cationically curable compound include, but are not limited to, other epoxides and oxetane compounds than the cycloaliphatic epoxides (a), the siloxane compounds (b1), and the cationically polymerizable compounds (b2); and vinyl ether compounds. Such other epoxides than the above compounds are also referred to as "other epoxides". The other cationically curable compound may also be selected from commercial products, such as products available typically under the trade name YX8000 (from Mitsubishi Chemical Corporation); and the trade name ARON OXETANE OXT221 (from Toagosei Co., Ltd.). The curable resin material, when containing the other cationically curable compound, may have a controlled viscosity, have better handleability, and less suffer from cure shrinkage upon formation of the wafer lens. The curable resin material for use in the present invention may contain each of different other cationically curable compounds alone or in combination.

The curable resin material may contain the other cationically curable compound(s) in a content (blending amount) not limited, but preferably 0 to 50 percent by weight (e.g., 5 to 50 percent by weight), more preferably 0 to 30 percent by weight (e.g., 5 to 30 percent by weight), and furthermore preferably 0 to 15 percent by weight, based on the total weight (100 percent by weight) of the curable resin material.

Release Agent

The curable resin material for use in the present invention may contain a release agent. The curable resin material, when containing the release agent, may tend to be more readily released from a wafer-lens-forming mold. Non-limiting examples of the release agent include (poly)oxyalkylenealkyl phosphate compounds; fluorine compounds (fluorine-containing release agents) such as fluorocarbon resins and fluoroalkyl-containing compounds; silicone compounds (silicone release agents) such as silicone oils and silicone resins; waxes such as polyethylene waxes, polypropylene waxes, and amide waxes; long-chain carboxylic acids; long-chain carboxylic acid metal salts; polyhydric alcohols such as poly(ethylene glycol)s; polytetrafluoroethylene powders; and any other known or common release agents. Among them, preferred are release agents containing a cationically curable functional group (e.g., epoxy group and/or oxetanyl group) in the molecule, such as fluorine compounds and silicone compounds each containing a cationically curable functional group. The curable resin material may contain each of different release agents alone or in combination. The release agents may also be selected from, but are not limited to, commercial products available typically under the trade names E-1430, E-1630, E-1830, E-2030, E-3430, E-3630, E-3830, E-4030, E-5244, E-5444, E-5644, and E-5844 (fluorine-containing release agents, each from Daikin Industries Ltd.). The content of the release agent(s) may be determined as appropriate according typically to the type of the release agent and molding method, is not limited, but is preferably 0.1 to 10 percent by weight, and more preferably 0.5 to 5 percent by weight, based on the total weight (100 percent by weight) of the curable resin material. This is preferred from the viewpoint of wafer lens (cured product) transparency.

Additives and Other Components

The curable resin material for use in the present invention may include one or more other components such as additives. Examples of the additives include, but are not limited to, known or common additives such as metal oxide particles, rubber particles, silicone- or fluorine-containing antifoaming agents, silane coupling agents, fillers, plasticizers, leveling agents, antistatic agents, flame retardants, colorants, antioxidants, ultraviolet absorbers, ion adsorbents, and pigments. The curable resin material may contain any of these additives in a content (blending amount) not limited, but preferably 5 percent by weight or less based on the total weight (100 percent by weight) of the curable resin material. The curable resin material for use in the present invention may include a solvent. However, an excessively large amount of the solvent may cause the wafer lens to contain bubbles. To eliminate or minimize this, the amount of the solvent may be controlled to be preferably 10 percent by weight or less, and more preferably 1 percent by weight or less, based on the total weight (100 percent by weight) of the curable resin material.

The curable resin material for use in the present invention may be prepared typically, but not limitatively, by combining predetermined amounts of the components, and stirring and mixing them, where necessary, with removal of bubbles typically in a vacuum. The stirring/mixing is performed at a temperature of typically preferably about 10°C to about 60°C. The stirring/mixing may be performed using any of known or common devices such as planetary centrifugal mixers, single-screw or multi-screw extruders, planetary mixers, kneaders, and dissolvers.

Cured Product

The curable resin material for use in the present invention has excellent curability. The curable resin material for use in the present invention, when cured, gives a cured product that maintains a high glass transition temperature and still has excellent mechanical strengths. The cured product is hereinafter also referred to as a "cured product according to the present invention". The curing of the curable resin material for use in the present invention can proceed typically by a method described in the description of an after-mentioned lens unit and non-lens unit molding process.

The cured product according to the present invention may have an internal transmittance (in terms of 0.5 mm thickness) at 400 nm of not limited, but preferably 70% or more (e.g., 70% to 100%), more preferably 75% or more, furthermore preferably 80% or more, and particularly preferably 85% or more.

The cured product according to the present invention may have a glass transition temperature (Tg) not limited, but preferably 100°C or higher (e.g., 100°C to 200°C), and more preferably 140°C or higher. The cured product, if having a glass transition temperature lower than 100°C, may have insufficient heat resistance in some use embodiments. The glass transition temperature of the cured product may be measured typically by a thermal analysis and/or dynamic viscoelastic measurement. Examples of the thermal analysis include DSC (differential scanning calorimeter) and TMA (thermomechanical analyzer).

The linear expansion coefficient ($\alpha$1) at temperatures equal to or lower than the glass transition temperature of the cured product according to the present invention is not limited, but preferably 40 to 100 ppm/°C, and more preferably 40 to 90 ppm/°C. The linear expansion coefficient ($\alpha$2) at temperatures equal to or higher than the glass transition temperature of the cured product according to the present invention is also not limited, but preferably 90 to 150 ppm/°C, and more preferably 90 to 130 ppm/°C. The linear expansion coefficients $\alpha$1 and $\alpha$2 of the cured product may be measured typically by TMA.

The cured product according to the present invention may have a storage modulus at 25°C of not limited, but preferably 0.1 GPa or more, and more preferably 1 GPa or more. The storage modulus of the cured product at 25°C may be measured typically by dynamic viscoelastic measurement.

The cured product according to the present invention may have a bending strength (flexural strength) at 25°C of not limited, but preferably 80 to 200 MPa, and more preferably 100 to 200 MPa. The cured product according to the present invention may have a bending strain at 25°C of not limited, but preferably 2% or more, and more preferably 3% or more. The "bending strain" refers to a strain at a maximum bending stress. The bending strength and bending strain of the cured product at 25°C may be measured typically in conformity to JIS K 7171.

Assume that the curable resin material for use in the present invention is used to give a cured product having a high Abbe number. The curable resin material in this case preferably includes the cycloaliphatic epoxide (a) as an essential component, and more preferably further includes the siloxane compound (b1) in addition to the cycloaliphatic epoxide (a). The curable resin material, when including the component(s), can give a cured product that has a high Abbe number and still has high heat resistance, high transparency, high curability, high glass transition temperature, and high mechanical strengths. The cured product having a high Abbe number may have a refractive index not limited, but preferably 1.40 to 1.60, and more preferably 1.45 to 1.55. The refractive index is a refractive index at 25°C with respect to light at a wavelength of 589 nm. The cured product having a high Abbe number may have an Abbe number not limited, but preferably 45 or more, and more preferably 50 or more.

Assume that the curable resin material for use in the present invention is used to give a cured product having a low Abbe number. The curable resin material in this case preferably includes the cycloaliphatic epoxide (a) as an essential component, and more preferably further includes the cationically polymerizable compound (b2) in addition to the cycloaliphatic epoxide (a). The cationically polymerizable compound (b2) is preferably an aromatic-ring-containing cationically polymerizable compound (b2). The curable resin material, when including the component(s), can give a cured product that has a low Abbe number and still has high heat resistance, high transparency, high curability, high glass transition temperature, high refractive index, and high mechanical strengths. The curable resin material, when including the component(s), can particularly give a cured product that has a low cure shrinkage and excellent shape stability. This may contribute to designing of wafer lenses with high precision. The cured product having a low Abbe number may have a refractive index not limited, but preferably 1.58 or more, and more preferably 1.60 or more. The refractive index is a refractive index at 25°C with respect to light at a wavelength of 589 nm. The cured product having a low Abbe number may have an Abbe number not limited, but preferably 35 or less, more preferably 30 or less, and furthermore preferably 27 or less.

The curable resin material for use in the present invention is preferably used to form the wafer lens array (A) and the wafer lens (B). This is because the resulting wafer lens array (A) and wafer lens (B) have properties such as heat resistance, curability, dimensional stability, and mechanical strengths all satisfactorily at excellent levels.

Light Blocking Unit Configuration

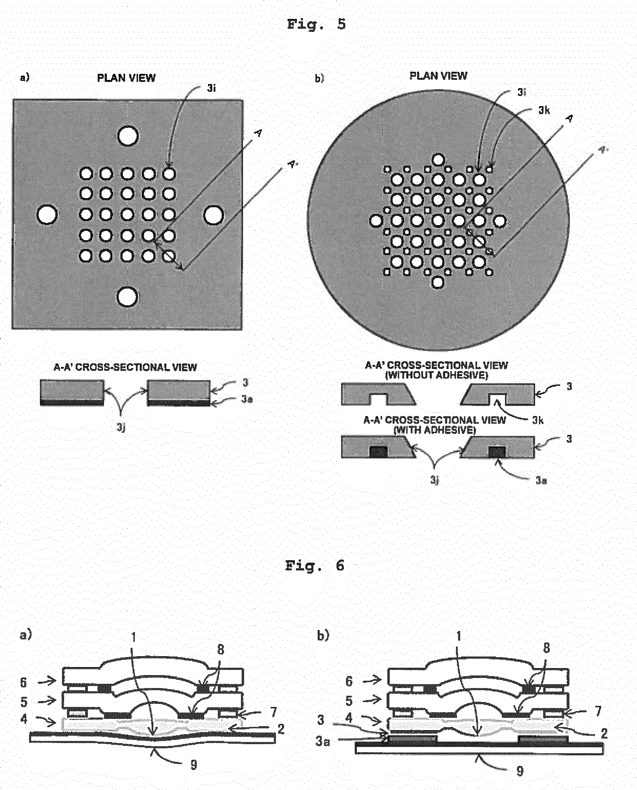

Fig. 5 illustrates exemplary configurations of a light blocking unit for use in the wafer lens array according to the present invention (the wafer lens array (A)). However, the present invention is not limited to these. The light blocking unit 3 illustrated in Fig. 5 is before being mounted at the lens unit 1 and/or the non-lens unit 2 in the wafer lens array (A).

The light blocking unit 3 may be in any form of plates, sheets, and films. The light blocking unit 3 in the wafer lens array (A) includes a plurality of openings 3i. The openings 3i are disposed at positions respectively corresponding to the lens units 1. The openings 3i may have a shape that is preferably, but not limitatively, similar or analogous to the shape of the lens units 1. Inner walls 3j of the openings 3i may have any shape not limited, but, for example, may have a square or rectangular cross section as illustrated in Fig. 5a), or may have a not-square or not-rectangular cross section (e.g., a tapered cross section) as illustrated in Fig. 5b).

A material for the light blocking unit 3 is not limited, as long as being a material undergone a light blocking treatment. The material may be selected from resinous materials and non-resinous materials. Examples of the resinous materials include, but are not limited to, polyethylene resins, polypropylene resins, polyamide resins, polyester resins, poly(ethylene terephthalate) resins, poly(butylene terephthalate) resins, polyether resins, polycarbonate resins, acrylic resin, polyimide resins, poly(ether ketone) resins, poly(ether ether ketone) resins, polyethersulfone resins, and polyphenylsulfone resins. Non-limiting examples of the non-resinous materials include inorganic materials such as metallic materials and glass materials. The material may be subjected to the light blocking treatment typically by combining the material with a black colorant or a black powder (e.g., carbon black or black titanium oxide); by coloring the material surface with a black coating material; or by coating the material with a black coating.

The light blocking unit 3 may bear an adhesive so as to bond to at least one of the lens unit 1 and the non-lens unit 2. The adhesive may be a non-curable adhesive or a curable adhesive. The adhesive, when being a curable adhesive, may be thermosetting or photo-curable. The "photo-curable" refers to being curable by active energy rays such as ultraviolet rays and electron beams.

The light blocking unit 3 bearing the adhesive may be prepared typically using a commercially available adhesive tape. Assume that the commercially available adhesive tape itself has a light blocking ability. In this case, the adhesive tape may be used as intact as the light blocking unit 3 (the light blocking unit 3 bearing an adhesive). Assume that the commercially available adhesive tape does not have a light blocking ability. In this case, the adhesive tape may be subjected to the light blocking treatment so as to be used as the light blocking unit 3 (the light blocking unit 3 bearing an adhesive). The adhesive tape may also be selected from dicing tapes, die bonding tapes, and semiconductor chip protection tapes. The commercially available adhesive tape is exemplified by, but is not limited to, products supplied by LINTEC Corporation, such as D Series, G Series, LE Tape, LD Tape, LC Tape, E Series, P Series, and L Series; products supplied by Hitachi Chemical Company, Ltd., such as HAE-1500 Series and HAE-1600 Series; dicing tapes (e.g., standard type and UV type) supplied by DENKI KAGAKU KOGYO KABUSHIKI KAISHA; dicing tapes supplied by Nitto Denko Corporation, such as V Series, UE Series, DU-300, DU-2187G, NBD-5000 Series, NBD-7000 Series, and NBD-3190K; dicing tapes supplied by Furukawa Electric Co., Ltd., such as SP Series, UC Series, and FC Series; and products supplied by Sumitomo Bakelite Co., Ltd., such as SUMILITE FSL.

The light blocking unit 3 may have an adhesion portion 3k to bear or hold an adhesive so as to bond to at least one of the lens unit 1 and the non-lens unit 2. To hold the adhesive, the adhesion portion 3k may for example be a concavity as illustrated in Fig. 5b), or may be a through hole (open hole). Assume that the adhesion portion 3k is a concavity or through hole. This configuration allows the adhesive to be held within the concavity or through hole, may prevent the adhesive from protruding to the region of the lens unit 1, and may eliminate or minimize deterioration of the optical performance due to such protruded adhesive. The configuration may eliminate the need for providing an adhesive layer between the light blocking unit 3 and at least one of the lens unit 1 and the non-lens unit 2. This allows the wafer lens array (A) and/or the wafer lens (B) to be thinner more easily. In addition, the configuration may eliminate or minimize thickness ununiformity of the wafer lens array (A) and/or the wafer lens (B) due to thickness ununiformity of the adhesive layer.

The wafer lens array according to the present invention (the wafer lens array (A)) and the wafer lens according to the present invention (the wafer lens (B)) may be produced typically, but not limitatively, by methods using known or common procedures. For example, assume that the lens unit(s) 1 and the non-lens unit 2 in the wafer lens array (A) and the wafer lens (B) are formed using a curable resin material (in particular, the curable resin material for use in the present invention). In this case, the wafer lens array (A) and the wafer lens (B) may be produced by production methods each including a lens unit and non-lens unit molding process and a step of mounting a light blocking unit to the lens unit and/or non-lens unit as essential steps (processes).

Lens Unit and Non-Lens Unit Molding Process

Hereinafter an exemplary process of molding (forming) the lens unit(s) 1 and the non-lens unit 2 to constitute the wafer lens array (A) or the wafer lens (B) will be illustrated. The process of molding the lens unit(s) 1 and the non-lens unit 2 in the present invention is, however, not limited to this.

The curable resin material, when cured and molded, gives the lens unit(s) 1 and the non-lens unit 2 to constitute the wafer lens array (A) or the wafer lens (B). Specifically, the lens unit(s) 1 and the non-lens unit 2 to constitute the wafer lens array (A) or the wafer lens (B) may be obtained by subjecting the curable resin material to cast molding or injection molding.

The molding of the lens unit(s) 1 and the non-lens unit 2 to constitute the wafer lens array (A) or the wafer lens (B) employs a mold (or mold assembly). This is hereinafter also referred to as a "wafer-lens-forming mold". A material for the wafer-lens-forming mold is not limited and may be any of materials such as metals, glass, and plastics.

Cast Molding Process

A non-limiting example of the cast molding process is a process including Steps 1a, 2a, and 3a as follows.

Step 1a is the step of preparing a wafer-lens-forming mold having one or more cavities so as to form the lens unit(s) 1 and the non-lens unit 2 to constitute the wafer lens array (A) or the wafer lens (B).

Step 2a is performed after Step 1a and is the step of bringing the curable resin material into contact with the wafer-lens-forming mold.

Step 3a is performed after Step 2a and is the step of applying heat and/or light to the curable resin material to cure the curable resin material.

The curing of the curable resin material is performed via the application of heat and/or light (Step 3a). When the heat application (heating) is performed, the heating temperature may be adjusted as appropriate according typically to the types of components and catalyst to be subjected to the curing reaction, is not limited, but is preferably 100°C to 200°C, and more preferably about 120°C to about 160°C. When the light application is performed, examples of the light source include, but are not limited to, mercury lamps, xenon lamps, carbon arc lamps, metal halide lamps, sunlight, electron beam sources, and laser sources. After the light application, the work may be heated typically at a temperature of about 50°C to about 180°C so as to allow the curing reaction to further proceed.

The cast molding process may further include Step 4a after Step 3a.

Step 4a is the step of annealing the curable resin material after curing (namely, the cured product).

The annealing may be performed typically, but not limitatively, by heating the work at a temperature of 100°C to 200°C for about 30 minutes to about one hour. The annealing of the work may be performed after, or without, demolding from the wafer-lens-forming mold.

Injection Molding Process

A non-limiting example of the injection molding process is a process including Steps 1b, 2b, and 3b as follows.

Step 1b is the step of preparing wafer-lens-forming mold having one or more cavities so as to form the lens unit(s) 1 and the non-lens unit 2 to constitute the wafer lens array (A) or the wafer lens (B).

Step 2b is performed after Step 1b and is the step of injecting a curable resin material into the wafer-lens-forming mold.

Step 3b is performed after Step 2b and is the step of applying heat and/or light to the curable resin material to cure the curable resin material.

The curing of the curable resin material in the injection molding process is performed by the application of heat and/or light. More specifically, the curing may be performed in a similar manner to the curing in the cast molding process.

The injection molding process may further include Step 4b after Step 3b.

Step 4b is the step of annealing the curable resin material after curing (namely, the cured product).

The annealing may be performed typically, but not limitatively, by heating at a temperature of 100°C to 200°C for about 30 minutes to about one hour. The annealing of the work may be performed after, or without, demolding from the wafer-lens-forming mold.

The curable resin material for use in the cast molding process and the injection molding process preferably has a low viscosity and offers excellent flowability. This is because the curable resin material of this configuration is capable of being charged into the wafer-lens-forming mold satisfactorily. The curable resin material for use in the cast molding process and the injection molding process may have a viscosity at 25°C of not limited, but preferably 3600 mpa•s or less, more preferably 2500 mPa·s or less, furthermore preferably 2000 mPa·s or less, and particularly preferably 1500 mPa·s or less. The curable resin material, when controlled to have a viscosity within the range, may have better flowability to eliminate or minimize remaining of bubbles and may less cause an increase charging pressure of the material into the wafer-lens-forming mold. This may give good coatability and good chargeability and may allow the cast molding and the injection molding to be performed with better workability.

The cured product obtained from the curable resin material via the cast molding process or the injection molding process is preferably excellent in heat resistance and capable of satisfactorily retaining its shape even in a high-temperature environment at a temperature of about 100°C to about 200°C. This configuration allows efficient production of the wafer lens array (A) or the wafer lens (B) having excellent center alignment accuracy of the lens unit(s) 1 even when the cured product is subjected to annealing after demolding from the wafer-lens-forming mold. In terms of the center alignment accuracy of the lens unit(s) 1, the misalignment of the center(s) of the lens unit(s) 1 is typically preferably about $\pm 2$ $\mu$m or less, and more preferably $\pm 1$ $\mu$m or less.

The cured product of the curable resin material for use in the present invention can satisfactorily retain its shape even in a high-temperature environment. This configuration may eliminate or minimize lens pitch deviation even when the cured product is subjected to annealing as in Step 4a and Step 4b. This allows cutting of the wafer lens array or wafer lens array stack with good precision without failure in the wafer lens array or wafer lens array stack cutting step.

The molding process as described above gives the lens unit(s) 1 and the non-lens unit 2 to constitute the wafer lens array (A) or the wafer lens (B).

Assume that the wafer lens array stack (C) or the wafer lens stack (D) is to be produced. In this case, the molding of a wafer lens array other than the wafer lens array (A), or of a wafer lens other than the wafer lens (B) may be performed in a similar manner to the molding of the lens unit(s) 1 and the non-lens unit 2 to constitute the wafer lens array (A) or the wafer lens (B).

Light Blocking Unit Mounting Step

The light blocking unit 3 is mounted to at least one of the lens unit(s) 1 and the non-lens unit 2 (either one or both of the lens unit(s) 1 and the non-lens unit 2) in the lens unit(s) 1 and the non-lens unit 2 obtained via the molding process. This gives the wafer lens array (A) or the wafer lens (B). An exemplary process of mounting the light blocking unit 3 to at least one of the lens unit(s) 1 and the non-lens unit 2 will be illustrated. However, the present invention is not limited to this.

The at least one of the lens units 1 and the non-lens unit 2 obtained via the molding process, when used to constitute the wafer lens array (A), is hereinafter also referred to as a "wafer lens array" in the description of the light blocking unit mounting step. To mount the light blocking unit 3 to the wafer lens array, the production method may further include Step 5 after Step 3a or Step 4a, or after Step 3b or Step 4b.

Step 5a is the step of mounting the light blocking unit 3 to the wafer lens array to give the wafer lens array (A).

In Step 5a, initially, there are prepared one wafer lens array obtained from any of Step 3a, Step 4a, Step 3b, and Step 4b; and one or two light blocking units 3 as separately produced. One light blocking unit 3 is prepared when the light blocking unit 3 is to be mounted on one side of the wafer lens array, whereas two light blocking units 3 are prepared when the light blocking units 3 are to be mounted on both sides of the wafer lens array.

Next, the light blocking unit(s) 3 is mounted to the wafer lens array. On this occasion, alignment is performed so that centers of the lens units 1 of the wafer lens array are aligned with the centers of corresponding openings of the light blocking unit 3. The alignment may be performed by using alignment marks; by providing such convex and concave portions in the wafer lens array and in the light blocking unit 3 as to fit each other; or by any other known or common techniques.

Upon mounting of the light blocking unit 3 to the wafer lens array, the wafer lens array and the light blocking unit 3 may be joined to each other by a known or common bonding means, or not. Assume that the light blocking unit 3 has an adhesion portion to hold an adhesive so as to bond to at least one of the lens units 1 and the non-lens unit 2 in the wafer lens array. In this case, the light blocking unit 3 is allowed to hold the adhesive in the adhesion portion before being mounted to the wafer lens array.

The light blocking unit 3 may be mounted to the wafer lens array through the medium of one or more spacers, or may be directly jointed and mounted to the wafer lens array without the medium of spacers.

In contrast, the lens unit 1 and the non-lens unit 2 obtained from the molding process, when used to constitute the wafer lens (B), is hereinafter also referred to as a "wafer lens" in the description of the light blocking unit mounting step. To mount the light blocking unit 3 to the wafer lens, the production method may further include Step 5b after Step 3a or Step 4a, or after Step 3b or Step 4b.

Step 5b is the step of mounting the light blocking unit 3 to the wafer lens to give the wafer lens (B).

In Step 5b, initially, there are prepared one wafer lens obtained from any of Step 3a, Step 4a, Step 3b, and Step 4b; and one or two light blocking units 3 produced separately. One light blocking unit 3 is prepared when the light blocking unit 3 is to be mounted to one side alone of the wafer lens; whereas two light blocking units 3 are prepared when the light blocking units 3 are to be mounted to both sides of the wafer lens.

Procedures or conditions such as alignment, joining, and spacer mediation of the wafer lens and the light blocking unit 3 may be as in Step 5a.

The mounting step as above gives the wafer lens array (A) or the wafer lens (B).

The wafer lens array stack according to the present invention (wafer lens array stack (C)) and the wafer lens stack according to the present invention (wafer lens stack (D)) may be produced by any methods using known or common procedures. The wafer lens array stack (C) may be produced typically, but not limitatively, in the following manner. Initially, a wafer lens array including the lens units 1 and the non-lens unit 2 is prepared via Step 3a (or Step 3a and Step 4a). Wafer lens arrays including the wafer lens array are stacked by after-mentioned Step 6c to give a stack. The light blocking unit 3 is mounted to at least one of the lens units 1 and the non-lens unit 2 in the stack by Step 5a and yields the wafer lens array (A). Alternatively, the wafer lens array stack (C) may also be produced typically by preparing the wafer lens array (A) via Step 3a (or Step 3a and Step 4a) and Step 5a, and stacking wafer lens arrays including the wafer lens array (A) by Step 6c. The wafer lens stack (D) may be prepared in a similar manner. For example, the wafer lens stack (D) may be produced by preparing a wafer lens including the lens unit 1 and the non-lens unit 2 via Step 3b (or Step 3b and Step 4b), stacking wafer lenses including the wafer lens by after-mentioned Step 6d to give a stack, and mounting the light blocking unit 3 to at least one of the lens unit 1 and the non-lens unit 2 in the stack by Step 5b to give the wafer lens (B). Alternatively, but not limitatively, the wafer lens stack (D) may also be produced by preparing the wafer lens (B) via Step 3b (or Step 3b and Step 4b) and Step 5b, and stacking wafer lenses including the wafer lens (B) by Step 6d. These production methods may further include one or more other steps.

Wafer Lens Array or Wafer Lens Stacking Step

The wafer lens array or wafer lens stacking step according to an embodiment will be illustrated below. However, the present invention is not limited to this.

To produce the wafer lens array stack (C), Step 6c as follows is preferably performed after Step 3a or Step 4a, or after Step 3b or Step 4b, or after Step 5a.

Step 6c is the step of stacking wafer lens arrays.

Step 6c may be performed before (in particular, directly before) Step 5a, or after (in particular, directly after) Step 5a, as in the embodiment.

In Step 6c, initially, wafer lens arrays are prepared. Of the wafer lens arrays, at least one is the wafer lens array (A), or is a wafer lens array including the lens units 1 and the non-lens unit 2 to constitute the wafer lens array (A). The number of the wafer lens arrays is not limited, but typically preferably 2 to 5, and particularly preferably 2 or 3. Use of wafer lens arrays in a number within the range may give a lens module that is reduced in size, weight, and thickness and still has excellent resolution.

Assume that the wafer lens arrays are each derived from a curable resin material. In this case, the wafer lens arrays may be derived from an identical curable resin material or different curable resin materials from each other. The wafer lens arrays may include (be made of) cured products all having an identical refractive index, or may include (be made of) cured products having different refractive indices from each other. The wafer lens arrays may include cured products all having an identical Abbe number, or include cured products having different Abbe numbers from each other. The wafer lens arrays may all have an identical shape or different shapes from each other.

Next, the wafer lens arrays are stacked. Assume that the stacking is performed so that the wafer lens array (A) (or the lens units 1 and the non-lens unit 2 to constitute the wafer lens array (A)) is a lowermost layer. In this case, the wafer lens array (A) is disposed so that the light blocking unit 3 in the wafer lens array (A) faces downward in the resulting wafer lens array stack (C), and one or more other wafer lens arrays are sequentially stacked on a side of the wafer lens array (A) opposite to the side bearing the light blocking unit 3. Assume that the wafer lens array (A) includes the light blocking units 3 at both sides. In this case, the wafer lens array (A) may be disposed so that any one of the both sides faces downward. Assume that one of the light blocking units 3 is a diaphragm. In this case, the wafer lens array (A) is disposed so that the side bearing the light blocking surface 3 acting as a diaphragm faces downward.

Upon stacking of the water lens arrays, alignment is performed so that centers of the lens units of one wafer lens array are aligned with centers of corresponding lens units of upper and lower wafer lens arrays. This lens center alignment is hereinafter also simply referred to as "alignment". The alignment may be performed typically by using alignment marks; by providing such convex and concave portions in upper and lower wafer lens arrays as to fit each other; by optimizing optical properties such as modulation transfer function (MTF); or any other known or common techniques.

Upon stacking of the wafer lens arrays, the individual wafer lens arrays may be joined to each other by a known or common bonding means, or not.

The wafer lens arrays may be stacked through the medium of spacers, or may be stacked on and joined directly to each other without the medium of spacers.

To produce the wafer lens stack (D), Step 6d as follows is preferably further performed after Step 3a or Step 4a, or after Step 3b or Step 4b, or after Step 5b.

Step 6d is the step of stacking wafer lenses.

Step 6d may be performed before (in particular, directly before) Step 5b, or may be performed after (in particular, directly after) Step 5b.

In Step 6d, initially, wafer lenses are prepared. Of the wafer lenses, at least one is the wafer lens (B), or a "wafer lens" including the lens unit 1 and the non-lens unit 2 to constitute the wafer lens (B). The number of the wafer lenses is not limited, but preferably typically 2 to 5, and particularly preferably 2 or 3. The use of the wafer lenses in a number within the range may give a lens module that is reduced in size, weight, and thickness and still has excellent resolution.

Assume that the wafer lenses are each derived from a curable resin material. In this case, the wafer lenses may be derived from an identical curable resin material, or different curable resin materials from each other. The wafer lenses may include (be made of) cured products all having an identical refractive index, or may include cured products having different refractive indices from each other. The wafer lenses may include cured products all having an identical Abbe number, or may include cured products having different Abbe numbers from each other. The wafer lenses may all have an identical shape or different shapes from each other.

In Step 6d, procedures or conditions such as the arrangement, alignment, joining, and spacer mediation of the wafer lenses may be as in Step 6c.

The method including the stacking step as described above gives the wafer lens array stack (C) or the wafer lens stack (D).

In addition to the above-mentioned method, examples of the method of producing the wafer lens (B) or the wafer lens stack (D) further include a production method that includes the step of cutting the wafer lens array (A) or the wafer lens array stack (C) as an essential step. Specifically, the wafer lens (B) may also be obtained by cutting the wafer lens array (A); and the wafer lens stack (D) may also be obtained by cutting the wafer lens array stack (C).

Wafer Lens Array or Wafer Lens Array Stack Cutting Step The step of cutting the wafer lens array (A) or the wafer lens array stack (C) according to an embodiment will be illustrated below. However, the present invention is not limited to this.

To produce the wafer lens (B), the production method further includes Step 7b after Step 5a.

Step 7b is the step of cutting the wafer lens array (A) obtained from Step 5a.

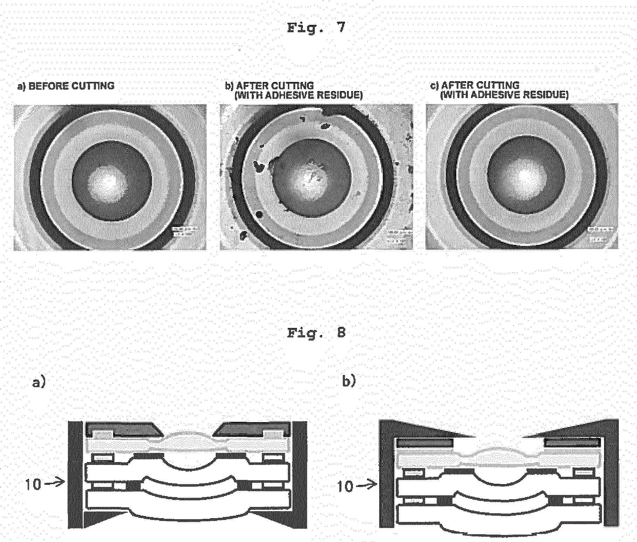

Fig. 6 illustrates exemplary wafer lenses each placed on a dicing tape 9. A cutting step of a conventional wafer lens array employs the step of placing and securing the wafer lens array onto the dicing tape, and then cutting the wafer lens array, as illustrated in Fig. 6a). In this process, the adhesive of the dicing tape is brought into contact with the lens units 1 of the wafer lens array. This inevitably leads to contamination of the surface of the lens units 1 with the adhesive, as illustrated in Fig. 7b). In many cases, the adhesive remained or deposited on the surface of the lens units 1 is hardly removable even by washing typically with a solvent and causes the wafer lenses to have lowered optical properties.

In contrast, in the step of cutting the wafer lens array (A) according to the present invention, cutting is performed after the side of the wafer lens array (A) bearing the light blocking unit 3 is secured onto a dicing tape as illustrated in Fig. 6b). In this case, the light blocking unit 3 also acts as a spacer. This configuration may eliminate or minimize the contact between the lens unit 1 and the adhesive of the dicing tape and eliminate or minimize the contamination of the lens unit 1 surface with the adhesive, as illustrated in Fig. 7c). The cutting of the wafer lens array (A) without such contamination may give wafer lenses (B) that are protected from deterioration in optical properties.

The method according to the present invention does not have to include the step of removing spacers, after the cutting step. Specifically, the member used as the spacers is used as intact as the light blocking unit 3. Assume that the light blocking unit 3 acts as a "diaphragm". This configuration avoids the need for mounting a "diaphragm" to each of the wafer lenses or wafer lens stacks obtained via the cutting step, but can provide wafer lenses or wafer lens stacks at once, where each of the wafer lenses or wafer lens stacks is inherently equipped with the "diaphragm". Based on these, the wafer lenses (B) and the wafer lens stacks (D) are considered to have such structural properties as to significantly contribute to higher production efficiency of wafer lenses or wafer lens stacks.

With the cutting step, the non-lens unit 2 and the light blocking unit 3 in the wafer lens array (A) are concurrently cut to give wafer lenses (B) each including the lens unit 1, the non-lens unit 2, and the light blocking unit 3.

When viewed planarly, the wafer lens array (A) may be cut in a curved line or in a straight line. In consideration of cutting process efficiency, the wafer lens array (A) is preferably cut in a straight line. Assume that the wafer lens array (A) is cut in a straight line or lines. In this case, the resulting the wafer lenses (B) have a polygonal shape when viewed planarly. The polygonal shape is preferably a rectangular shape in consideration of cutting process efficiency.

The cutting of the wafer lens array (A) in Step 7b may be performed typically with a known or common processing means. Step 7b is unnecessary when the wafer lens (B) is directly obtained by Step 5b.

To produce the wafer lens stacks (D), the method may further include Step 7d after Step 6c or Step 5a.

Step 7d is the step of cutting the wafer lens array stack (C) obtained from Step 6c or Step 5a.

The cutting of the wafer lens array stack (C) may be performed in a similar manner to Step 7b. With the cutting step, the non-lens units 2 and the light blocking units 3 of individual wafer lens arrays constituting the wafer lens array stack (C) are concurrently cut to give wafer lens stacks (D) each including the lens unit 1, the non-lens unit 2, and the light blocking unit 3.

Step 7d is unnecessary when the wafer lens stack (D) is directly obtained via Step 6d.

Examples of the dicing tape 9 for use in Step 7b or Step 7d include, but are not limited to, the commercially available adhesive tapes exemplified as those for use in the light blocking unit. An adhesive for use in the adhesive tapes may be a non-curable adhesive or a curable adhesive. The adhesive, when being a curable adhesive, may be thermosetting or photo-curable. The "photo-curable" refers to being curable by active energy rays such as ultraviolet rays and electron beams. The adhesive, when being a curable adhesive, is solidified by the application of heat and/or light after Step 7b or Step 7d. This configuration allows the resulting wafer lenses (B) or wafer lens stacks (D) to be more easily removed from the dicing tape 9.

Lens Module

The wafer lens (B) or the wafer lens stack (D) may be used to give a lens module including the wafer lens (B) or the wafer lens stack (D). This lens module is also referred to as a "lens module according to the present invention". Hereinafter exemplary configurations of the lens module according to the present invention will be illustrated. Fig. 8 illustrates exemplary configurations of the lens module. However, the present invention is not limited to these.

In an embodiment, the wafer lens (B) or the wafer lens stack (D) may be used as intact as the lens module. In another embodiment, the component, such as the non-lens unit, of the wafer lens (B) or the wafer lens stack (D) may be subjected to a treatment such as a light blocking treatment before use as the lens module. In yet another embodiment, a tubular member bearing or housing the wafer lens (B) or the wafer lens stack (D) may be used as the lens module. The resulting article is hereinafter also referred to as a "barrel".

Assume that the wafer lens stack (D) including the wafer lens (B) as an outermost wafer lens is used to give a barrel. In this case, the wafer lens stack (D) may be mounted into a tubular member so that the side of the wafer lens stack (D) bearing the wafer lens (B) constitutes the object side.

Assume that the wafer lens (B) or wafer lens stack (D) having a diaphragm is used to give a barrel. In this case, the wafer lens (B) or the wafer lens stack (D) may be mounted into a tubular member so that the side of the wafer lens (B) or the wafer lens stack (D) bearing the diaphragm constitutes the object side. In this case, the tubular member may have a diaphragm, or not.

Examples of the barrel configuration include, but are not limited to, configurations as illustrated in Fig. 8a) and Fig. 8b). In the configuration illustrated in Fig. 8a), the wafer lens (B) or the wafer lens stack (D) has a diaphragm. This eliminates the need for a diaphragm in the tubular member when the wafer lens (B) or the wafer lens stack (D) is mounted into the tubular member so that the side bearing the diaphragm constitutes the object side. The wafer lens (B) or the wafer lens stack (D) may be secured to the tubular member at a sensor module side, i.e., a side opposite to the object side. In the configuration illustrated in Fig. 8a), projections of the tubular member abut against the wafer lens (B) or the wafer lens stack (D) at a position opposite to the object side, to secure the wafer lens (B) or the wafer lens stack (D). The projections of the tubular member may abut against the wafer lens (B) or the wafer lens stack (D) at a position corresponding to the lens unit, or at a position corresponding to another portion than the lens unit. In the configuration illustrated in Fig. 8b), the wafer lens (B) or the wafer lens stack (D) does not have a diaphragm, and the tubular member therefore has a diaphragm. In the configuration in Fig. 8b), the wafer lens (B) or the wafer lens stack (D) may be secured to the tubular member at either of the object side and the sensor module side (image-forming side).

When the barrel is used as the lens module, the tubular member may be selected from known or common ones. The inner circumferential shape of the tubular member may conform to the outer circumferential shape of the wafer lens (B) or the wafer lens stack (D), or not. Assume that there is a gap or clearance between the inner circumference of the tubular member and the outer circumference of the wafer lens (B) or the wafer lens stack (D). In this case, the gap may be charged with any of spacers, light blocking materials, cushioning materials, and any other materials or articles. The tubular member may bear, at the inner wall, a member (such as projections) to secure the wafer lens (B) or the wafer lens stack (D).

Non-limiting examples of the lens module according to the present invention include various lenses including lenses to be mounted to cameras in optical devices, such as personal computer cameras, cellular phone cameras, smartphone cameras, tablet terminal cameras, mobile device cameras, digital cameras, car-mounted cameras, and security cameras; laser condensing or diffusing lenses to be mounted typically to medical devices; and sunlight condensing or diffusing lenses to be mounted typically to photovoltaic power generating equipment.

Optical Device

The lens module according to the present invention may be used to give an optical device. The optical device includes the lens module according to the present invention. The optical device is hereinafter also referred to as an "optical device according to the present invention". The optical device according to the present invention are exemplified by, but are not limited to, various optical devices such as digital cameras, car-mounted cameras, and security cameras, as mentioned above.

Imaging Module

The lens module according to the present invention may be used to give an imaging module (image pickup module). This imaging module is hereinafter also referred to as an "imaging module according to the present invention". Exemplary configurations of the imaging module according to the present invention will be illustrated below. However, the present invention is not limited to these.

The imaging module according to the present invention includes the lens module (the lens module according to the present invention) and a sensor module. An image of the object is formed, through the lens unit of the lens module, on a solid-state image sensing device of the sensor module. Examples of the solid-state image sensing device include charge coupled devices (CCDs) and complementary metal-oxide semiconductors (CMOS).

The imaging module according to the present invention may include a spacer between the lens unit and the solid-state image sensing device so as to avoid the lens unit(s) of the lens module according to the present invention from coming in contact with the sensor module. The spacer may be disposed so as to surround the solid-state image sensing device, or may be disposed in a columnar form at any three or four points around the solid-state image sensing device.

Imaging Device

The imaging module according to the present invention may be used to give an imaging device. This imaging device includes the imaging module according to the present invention and is hereinafter also referred to as an "imaging device according to the present invention". Exemplary configurations of the imaging device according to the present invention will be illustrated below. However, the present invention is not limited to these.

The imaging module according to the present invention may be installed on a circuit board and incorporated into an imaging device. The installation on the circuit board is preferably performed as a reflow mounting process so as to offer better production efficiency.

A non-limiting example of the reflow mounting process is a process including Steps 11 to 13 as follows.

Step 11 is the step of preparing a circuit board soldered at a position at which an imaging module will be mounted.

Step 12 is the step of placing the imaging module on the circuit board at the soldered position.

Step 13 is the step of subjecting the circuit board bearing the imaging module to a heat treatment.

In Step 11, the circuit board may be soldered typically, but not limitatively, by printing solder on the circuit board.

The heat treatment of the circuit board in Step 13 may be performed typically, but not limitatively, by leaving the circuit board in a heating furnace for a predetermined time; by exposing the circuit board to hot air; and/or by irradiating the circuit board with infrared rays. The wafer lens (B) and the wafer lens stack (D) each derived from the curable resin material for use in the present invention have high heat resistance and are suitable for a reflow mounting process including a heating step such as Step 13.

The imaging device according to the present invention may be used typically, but not limitatively, as or for imaging devices including cameras in various optical devices, such as personal computer cameras, cellular phone cameras, smartphone cameras, tablet terminal cameras, mobile device cameras, digital cameras, car-mounted cameras, security cameras, and medical device cameras.

Industrial Applicability

The wafer lens (wafer lens including the light blocking unit), wafer lens array, lens module, imaging module, imaging device, and production methods for them, according to the present invention, are advantageously usable as or applicable to cameras in various optical devices, such as personal computer cameras, cellular phone cameras, smartphone cameras, tablet terminal cameras, mobile device cameras, digital cameras, car-mounted cameras, security cameras, and medical device cameras. These optical devices require satisfactory reduction in size, weight, and thickness and still require high quality and high performance.

Reference Signs List

1:      lens unit 1
2:      non-lens unit 2
3:      light blocking unit 3
3a:     adhesive
3i:     opening
3j:     opening inner wall
3k:     adhesion portion
4:      first lens
5:      second lens
6:      third lens
7:      adhesive
8:      light blocker
9:      dicing tape
10:     tubular member

**Claims**

**1.**  A wafer lens array comprising:

a plurality of lens units 1 being one-dimensionally or two-dimensionally arrayed;
a non-lens unit 2 bonded to a periphery of each of the plurality of lens units 1 to couple the plurality of lens units 1 to each other; and
a light blocking unit 3 disposed at at least one of the lens units 1 and the non-lens unit 2 on an object side,
the lens units 1 and the light blocking unit 3 having heights meeting a condition specified by Expression (1):

$$\text{Height of lens unit 1} < \text{Height of light blocking unit 3}$$

Expression (1)

wherein the "height" in Expression (1) refers to a vertical dimension from a horizontal plane to an object-side surface of each unit assuming that the wafer lens array is placed on the horizontal plane so as to allow the object side of the wafer lens array to face upward, and
wherein, when at least one of the lens units 1 and the light blocking unit 3 includes a plurality of portions having different heights, the term "height" in Expression (1) refers to a height of a highest portion among the plurality of portions.

**2.**  The wafer lens array according to claim 1,
wherein the lens units 1, the non-lens unit 2, and the light blocking unit 3 have heights meeting a condition specified by Expression (2):

$$\text{Height of non-lens unit 2} \leq \text{Height of lens unit 1} <$$

$$\text{Height of light blocking unit 3} \qquad \text{Expression (2)}$$

wherein the "height" in Expression (2) is defined as with the height in Expression (1), and

wherein, when at least one of the lens units 1, the non-lens unit 2, and the light blocking unit 3 includes a plurality of portions having different heights, the "height" refers to a height of a highest portion among the plurality of portions.

3. The wafer lens array according to claim 1,
   wherein the lens units 1, the non-lens unit 2, and the light blocking unit 3 have heights meeting a condition specified by Expression (3):

$$\text{Height of lens unit 1} < \text{Height of non-lens unit 2} <$$

$$\text{Height of light blocking unit 3} \qquad \text{Expression (3)}$$

wherein the "height" in Expression (3) is defined as with the height in Expression (1), and

wherein, when at least one of the lens units 1, the non-lens unit 2, and the light blocking unit 3 includes a plurality of portions having different heights, the "height" refers to a height of a highest portion among the plurality of portions.

4. The wafer lens array according to any one of claims 1 to 3,
   wherein the light blocking unit 3 is disposed on or over part of the lens units 1.

5. A wafer lens array stack comprising
   a plurality of wafer lens arrays being stacked,
   the plurality of wafer lens arrays including at least one wafer lens array according to any one of claims 1 to 4.

6. The wafer lens array stack according to claim 5,
   wherein, of the plurality of wafer lens arrays, a wafer lens array disposed nearest to an object side is the wafer lens array according to any one of claims 1 to 4.

7. A wafer lens comprising:

   a lens unit 1;
   a non-lens unit 2 bonded to a periphery of the lens unit 1; and
   a light blocking unit 3 disposed at at least one of the lens unit 1 and the non-lens unit 2 on an object side,
   the lens unit 1 and the light blocking unit 3 having heights meeting a condition specified by Expression (1):

$$\text{Height of lens unit 1} < \text{Height of light blocking unit 3}$$

$$\text{Expression (1)}$$

wherein the "height" in Expression (1) refers to a vertical dimension from a horizontal plane to an object-side surface of each unit assuming that the wafer lens is placed on the horizontal plane so as to allow the object side of the wafer lens to face upward, and

wherein, when at least one of the lens unit 1 and the light blocking unit 3 includes a plurality of portions having different heights, the "height" in Expression (1) refers to a height of a highest portion among the plurality of portions.

8. The wafer lens according to claim 7,
   wherein the lens unit 1, the non-lens unit 2, and the light blocking unit 3 have heights meeting a condition specified by Expression (2):

$$\text{Height of non-lens unit 2} \leq \text{Height of lens unit 1} <$$

$$\text{Height of light blocking unit 3} \qquad \text{Expression (2)}$$

wherein the "height" in Expression (2) is defined as with the height in Expression (1), and

wherein, when at least one of the lens unit 1, the non-lens unit 2, and the light blocking unit 3 includes a plurality of portions having different heights, the "height" refers to a height of a highest portion among the plurality of portions.

9. The wafer lens according to claim 7,
wherein the lens unit 1, the non-lens unit 2, and the light blocking unit 3 have heights meeting a condition specified by Expression (3):

$$\text{Height of lens unit 1} < \text{Height of non-lens unit 2} <$$

$$\text{Height of light blocking unit 3} \qquad \text{Expression (3)}$$

wherein the "height" in Expression (3) is defined as with the height in Expression (1), and

wherein, when at least one of the lens unit 1, the non-lens unit 2, and the light blocking unit 3 includes a plurality of portions having different heights, the "height" in Expression (3) refers to a height of a highest portion among the plurality of portions.

10. The wafer lens according to any one of claims 7 to 9,
wherein the light blocking unit 3 is disposed on or over part of the lens unit 1.

11. A wafer lens obtained by cutting the wafer lens array according to any one of claims 1 to 4.

12. A wafer lens stack comprising
a plurality of wafer lenses being stacked,
the plurality of wafer lenses including at least one wafer lens according to any one of claims 7 to 11.

13. The wafer lens stack according to claim 12,
wherein, of the plurality of wafer lenses, a wafer lens disposed nearest to an object side is the wafer lens according to any one of claims 7 to 11.

14. A wafer lens stack obtained by cutting the wafer lens array stack according to one of claims 5 and 6.

15. A lens module comprising
at least one of the wafer lens according to any one of claims 7 to 11 and the wafer lens stack according to any one of claim 12 to 14.

16. An optical device comprising
the lens module according to claim 15.

17. An imaging module comprising
the lens module according to claim 15.

18. An imaging device comprising
the imaging module according to claim 17.

Fig. 1

a)

b)

HEIGHT OF UNIT 1    HEIGHT OF UNIT 3

HEIGHT OF UNIT 2

c)

Fig. 2

a)    b)    c)

Fig. 3

a)

b)

c)

Fig. 4

a)

b)

c)

Fig. 5

a) PLAN VIEW

3i

A

A'

A-A' CROSS-SECTIONAL VIEW

3

3a

3j

b) PLAN VIEW

3i

3k

A

A'

A-A' CROSS-SECTIONAL VIEW
(WITHOUT ADHESIVE)

3

3k

A-A' CROSS-SECTIONAL VIEW
(WITH ADHESIVE)

3

3j

3a

Fig. 6

a)

6
5
4

1

8

7

2

9

b)

6
5
3
3a

1
4

8

7

2

9

Fig. 7

a) BEFORE CUTTING     b) AFTER CUTTING          c) AFTER CUTTING
                         (WITH ADHESIVE RESIDUE)    (WITH ADHESIVE RESIDUE)

Fig. 8

a)                                    b)

## INTERNATIONAL SEARCH REPORT

| International application No. |
|---|
| PCT/JP2014/072079 |

**A. CLASSIFICATION OF SUBJECT MATTER**
*G02B3/00*(2006.01)i, *G02B5/00*(2006.01)i, *G02B7/02*(2006.01)i

According to International Patent Classification (IPC) or to both national classification and IPC

**B. FIELDS SEARCHED**

Minimum documentation searched (classification system followed by classification symbols)
G02B3/00, G02B5/00, G02B7/02

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho  1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-46995 A  (Canon Components, Inc.), 07 March 2013 (07.03.2013), | 1-2,5-8, 12-16 |
| Y | paragraphs [0020], [0033]; fig. 5 & CN 102896715 A | 17-18 |
| X | JP 2013-15586 A  (Nippon Sheet Glass Co., Ltd.), 24 January 2013 (24.01.2013), paragraphs [0036], [0047] to [0048]; fig. 2, 8 & US 2013/0003142 A1 | 1,3-7,9-16 |
| Y | JP 2010-129989 A  (Sharp Corp.), 10 June 2010 (10.06.2010), paragraphs [0001], [0045]; fig. 1 & US 2010/0133419 A1     & CN 101752271 A | 17-18 |

☐ Further documents are listed in the continuation of Box C.          ☐ See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 October, 2014 (27.10.14) | 04 November, 2014 (04.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 037 852 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013170092 A
- JP 2008133439 A
- JP 2011001401 A
- JP 2011132416 A
- JP 2012116989 A
- JP 2010102312 A
- JP 2010173196 A
- JP 2011062373 A
- JP 2008248169 A
- JP 2008019422 A
- JP 2009179568 A